# EUROPÄISCHE PATENTSCHRIFT

(11) **EP 2 763 112 B1**
(45) Veröffentlichungstag und Bekanntmachung des Hinweises auf die Patenterteilung: **08.05.2019**
(21) Anmeldenummer: 14151212.9
(22) Anmeldetag: 15.01.2014
(51) Int. Cl.: G08B 7/06, G08B 27/00, H04W 4/90

(54) **Dynamische Notfallhilfe**
Dynamic emergency aid
Aide d'urgence dynamique

(30) Priorität: 05.02.2013 DE 102013201873
(43) Veröffentlichungstag der Anmeldung: 06.08.2014
(73) Patentinhaber: Siemens Schweiz AG, 8047 Zürich (CH)
(72) Erfinder: Frey, Christian, 6314 Unterägeri (CH)
(74) Vertreter: Maier, Daniel Oliver

(56) Entgegenhaltungen:
- DE-A1-102011 078 965
- US-A1- 2007 279 210
- US-A1- 2009 058 648
- US-A1- 2011 136 463

## Beschreibung

Die vorliegende Erfindung betrifft ein Verfahren, ein Computerprogramm-Produkt und eine Anordnung zur dynamischen Ausgabe von Informationen zur Evakuierung von Personen, insbesondere aus Gebäuden, auf ein Smartphone.

Die schnelle und sichere Notfallevakuierung von Personen aus Gebäuden aber auch bei Veranstaltungen unter freien Himmel (z.B. Rockkonzert) spielt heutzutage eine immer größere Rolle, insbesondere hinsichtlich Terrorattacken oder Umweltkatastrophen. Eine schnelle und sichere Notfallevakuierung ist deshalb bereits bei der Planung von Infrastrukturen, z.B. für Gebäude oder Konzerte ein wichtiger Aspekt.

Bekannte Evakuierungssysteme sind allerdings statisch ausgelegt, wie z.B. die Kennzeichnung von Notausgängen bzw. die Wegführung zu im Gebäude befindlichen Notausgängen.

Die deutsche Patentanmeldung DE102011078965A1 offenbart ein System und ein Verfahren zur Routenberechnung für mindestens ein Objekt das sich innerhalb eines vorgegebenen Gebiets oder Gebäudes befindet, mittels einer veränderbaren Metrik eines Navigationsfeldes.

Die US Patentanmeldung US2011/0136463A1 beschreibt ein System zur Notfallevakuierung, wobei einem Nutzer basierend auf Positionsdaten eines mobilen Gerätes des Nutzers entsprechende Evakuierungsinformationen ausgegeben werden.

Die US Patentanmeldung US2009/0058648A1 offenbart, dass Notfallinformationen auf einen RFID-Tag geschrieben werden, und dass diese Notfallinformationen in einer Notfallsituation von einem Responder gelesen werden können, um Rettungspersonal mit Informationen in einer Notfallsituation zu versorgen.

Es ist Aufgabe der vorliegenden Erfindung ein Verfahren, ein Computerprogramm-Produkt und eine Anordnung zur dynamischen Ausgabe von Informationen zur Evakuierung von Personen aus Gebäuden bereitzustellen.

Die Aufgabe wird gelöst durch ein Verfahren zur dynamischen Ausgabe von Informationen zur Evakuierung von Personen, insbesondere aus Gebäuden, auf ein Smartphone, das Verfahren umfassend:
- Bestimmen der aktuellen Positionsdaten des Smartphone durch ein Positionsbestimmungssystem;
- Bestimmen der aktuellen Verwendbarkeit von im Gebäude befindlichen Fluchtwegen durch eine geeignete erste Sensorik;
- Ermitteln von Evakuierungsinformationen durch eine Steuereinheit, basierend auf der aktuellen Verwendbarkeit der Fluchtwege und der aktuellen Position des Smartphone; und
- Ausgeben der Evakuierungsinformationen auf dem Smartphone, wobei die Evakuierungsinformationen als grafische Routinginformation auf einem Gebäudeplan auf dem Smartphone ausgegeben werden, wobei der Gebäudeplan durch Einlesen einer am Gebäude befindlichen Kennzeichnung (QR) in Form eines QR-Codes oder Barcodes durch eine geeignete Lesevorrichtung des Smartphone (MG) geladen wird.

Fluchtwege sind je nach der Anzahl der Personen in den verschiedenen Gebäudeteilen stark oder weniger stark ausgelastet. Weiterhin können Fluchtwege durch Hindernisse (z.B. durch Brand oder Rauch) versperrt oder nur schwer passierbar sein. Die Räumung eines Gebäudes erfolgt allerdings schneller, wenn die Personen dynamisch (je nach Auslastung bzw.

Verfügbarkeit) zu offenen und passierbaren Fluchtwegen geführt werden. Die aktuelle Verwendbarkeit von Fluchtwegen kann z.B. durch sowieso schon im Gebäude befindliche Kameras überwacht und bestimmt werden. Mit Vorteil wird die Evakuierungsinformation auf Smartphones ausgegeben, die sich sowieso schon im Besitz von Benutzern befinden. Prinzipiell kann die Evakuierungsinformation aber auch auf Smartphones ausgegeben werden, die ein Benutzer (Besucher) erst im Gebäude ausgehändigt bekommt (z.B. ein elektronischer Museumsführer oder ein sogenannter Multimedia-Guide). Mit Vorteil ist das Smartphone mit einem Positionsbestimmungssystem (z.B. GPS-System) ausgestattet, welches zur Positionsbestimmung des Smartphone verwendbar ist. Es ist aber auch möglich, dass das Bestimmen der aktuellen Positionsdaten des Smartphone durch ein separates Positionsbestimmungssystem, z.B. ein im Gebäude befindliches "Indoor-Positionsbestimmungssystem" (Indoor Positioning System, IPS) erfolgt. Im Prinzip kann ein IPS auch auf freiem Gelände installiert sein. Ein IPS kann z.B. durch entsprechend angeordnete lokale Funkzellen realisiert sein, wie WLAN-Knoten, Hotspots, Accesspoints etc. Die Erfindung ermöglicht insbesondere die Bereitstellung von dedizierten Evakuierungsinformationen entsprechend der aktuellen Lokalisation und Situation für die jeweiligen Personen.

Eine erste vorteilhafte Ausgestaltung der Erfindung liegt darin, dass die Bestimmung der aktuellen Verwendbarkeit von Fluchtwegen auf deren jeweiligen Auslastung und/oder deren Passierbarkeit beruht. Fluchtwege sind je nach der Anzahl der Personen in den verschiedenen Gebäudeteilen stark oder weniger stark ausgelastet. Weiterhin können Fluchtwege durch Hindernisse (z.B. durch Brand oder Rauch) versperrt oder nur schwer passierbar sein. In den Fluchtwegen (z.B. Treppenhäusern) werden geeignete Sensoren (z.B. Kameras und/oder Rauch-/Gasmelder) platziert. Diese Sensoren erfassen z.B. Rauch, Anzahl der Personen (Auslastung). Dadurch kann die Auslastung bzw. Verwendbarkeit (Fluchtweg verraucht) eines Fluchtweges ermittelt werden. Die Räumung eines Gebäudes erfolgt allerdings schneller, wenn die Personen dynamisch (je nach Auslastung bzw. Verfügbarkeit) zu offenen und passierbaren Fluchtwegen geführt werden. Die aktuelle Position des Smartphone ist auch ein Hinweis auf die aktuelle Position des Geräteinhabers. Dadurch können für eine Person jeweils dedizierte Evakuierungsinformation (d.h. in Abhängigkeit vom Aufenthaltsort und der vorliegenden Gefahrensituation) auf dem Smartphone ausgegeben werden.

Die vorliegende Erfindung ermöglicht es u.a., bei der Evakuierung von Personen aus Gebäuden die aktuelle Auslastung und aktuelle Passierbarkeit von Fluchtwegen, sowie den Aufenthaltsort einer zu rettenden Person zu berücksichtigen. Es werden somit aktuell vorliegende Engpässe aber auch zu erwartende Engpässe erkannt und bei der Evakuierung berücksichtigt. Dadurch können bei der Evakuierung u.a. Paniksituationen vermieden werden.

Die Erfindung besteht unter anderem darin, dass ein Gebäudeplan des Gebäudes auf das Smartphone geladen wird und die Evakuierungsinformation als Routinginformation auf dem Gebäudeplan grafisch auf dem Smartphone ausgegeben wird. Der Gebäudeplan kann z.B. aus einem Gebäudeinformationsmodell (Building Information Model, BIM) generiert und auf das Smartphone geladen werden, z.B. über eine WLAN-Verbindung beim Betreten eines Gebäudes. Handelt es sich beim Smartphone um ein Gerät, welches einer Person beim Betreten eines Gebäudes ausgehändigt wird (z.B. Multimedia-Guide in einem Museum), dann ist mit Vorteil dieses Gerät bereits mit dem entsprechenden Gebäudeplan bestückt. Das Smartphone kann die Fluchtweg-Daten (Evakuierungsdaten) ähnlich wie bei handelsüblichen Navigationssystemen in einer 2D/3D-Grafik (Map) darstellen. Es ist aber auch möglich die Evakuierungsdaten z.B. im Kamera-Live-View-Modus (bzw. Live-Preview-Modus), wie es bei Digitalkameras bekannt ist, darzustellen. Die Darstellung der Evakuierungsinformation auf dem Gebäudeplan kann z.B. durch Informationseinblendung (Bild und/oder Textinformation) mittels Overlaytechnik erfolgen (z.B. durch direktes Hardware-Overlay oder auch durch Software-Overlay).

Die Erfindung besteht insbesondere darin, dass der Gebäudeplan des Gebäudes auf das Smartphone durch das Einlesen einer am Gebäude befindlichen Kennzeichnung durch eine geeignete Lesevorrichtung des Smartphone geladen wird. Es ist erfindungsgemäß vorgesehen, durch das Einlesen einer am Gebäude befindlichen Kennzeichnung durch eine geeignete Lesevorrichtung des Smartphone den Gebäudeplan auf das Smartphone zu laden. Z.B. durch das Einlesen eines QR-Codes, der sich am Gebäude befindet (z.B. als zusätzliche Information auf den Notweg-/Notausganghinweisschildern).

Eine weitere vorteilhafte Ausgestaltung der Erfindung liegt darin, dass basierend auf den jeweils aktuellen Positionsdaten der im Gebäude befindlichen Personen und der aktuellen Verwendbarkeit der Fluchtwege, eine Objektstromsimulation durchführt, und wobei basierend auf den Ergebnissen der Objektstromsimulation jeweils aktualisierte Evakuierungsinformationen auf dem Smartphone ausgegeben werden. Durch eine Objektstromsimulation wird die zu erwartende Bewegung von Personen möglichst realistisch nachgebildet, um daraus beispielsweise Aussagen zur Evakuierung der Personen aus Gebäuden ableiten zu können. Dadurch, dass die Positionsinformation von Personen und die Verfügbarkeit von Fluchtwegen als Eingangsparameter für eine Objektstromsimulation verwendet werden, kann dediziert für die jeweilige Person eine dedizierte Fluchtroute berechnet werden. Z.B. der schnellste Weg einer Person von ihrem aktuellen Standort zum nächsten passierbaren Notausgang. Dadurch kann eine effektive Evakuierung eines vorgegebenen Gebietes oder Gebäudes erfolgen. Die Objektstromsimulation kann auf einem handelsüblichen Computer (z.B. Server, Laptop, PC) mit geeigneter Simulationssoftware durchgeführt werden. Die Objektstromsimulation kann z.B. auf einem Computer eines Gebäudeleitsystems erfolgen oder in einer Cloud (Cloud Computing). Optional kann bei der Objektstromsimulation auch die Emissionsausbreitung einer Gefahrenquelle (z.B. Feuer oder Rauchgas) im Gebäude oder auf dem Gelände mit berücksichtigt werden. Auch dadurch ist die Generierung und Bereitstellung von genauen und zielgerichteten Evakuierungsinformationen möglich. Weiterhin kann optional bei der Objektstromsimulation auch die Bewegungsrichtungen der sich im Gebäude (auf dem Gelände) befindlichen Personen berücksichtigt werden. Die Bewegungsrichtung kann z.B. durch Kameras oder andere geeignete Sensorik bestimmt werden.

Eine weitere vorteilhafte Ausgestaltung der Erfindung liegt in einem Computerprogramm-Produkt, das direkt in den internen Speicher eines Smartphone geladen werden kann und Softwareabschnitte umfasst, mit denen das erfindungsgemässe Verfahren zur dynamischen Ausgabe von Informationen zur Evakuierung von Personen durchführbar ist. Das Computerprogramm-Produkt enthält ausführbaren Programmcode der auf einem Prozessor des Smartphone ausgeführt wird. Das Computerprogramm-Produkt kann als Softwareprogramm auf das Smartphone geladen werden, z.B. über eine USB-Schnittstelle oder über eine kabellose Funkverbindung. Optional kann das Computerprogramm-Produkt auch als Firmware auf dem Smartphone implementiert sein (z.B. in einem Flash-Speicher oder einem EPROM). Dadurch, dass sich das Computerprogramm-Produkt auf dem Smartphone des Benutzers (z.B. Person im Gebäude) befindet, können sehr leicht für die jeweilige Person personenspezifische Evakuierungsinformationen, insbesondere hinsichtlich Identität und Aufenthaltsort, auf dem Smartphone bereitgestellt werden. Dies erleichtert z.B. Rettungsteams ein schnelles Auffinden der Person im Gebäude.

Eine weitere vorteilhafte Ausgestaltung der Erfindung liegt darin, dass es sich beim Computerprogramm-Produkt um ein vom Benutzer vom Internet oder einem Intranet herunterladbares Softwareprogramm (App) handelt. Ein Benutzer kann somit bei Bedarf (on demand) das Computerprogramm-Produkt (z.B. ein Softwareprogramm) als sog. App (mobile App) auf sein Smartphone laden. Die App kann z.B. von einem Service-Provider über dessen Internet-Marktplatz (wie. Z.B. App Store™, Google Play™) auf Anforderung durch den Benutzer bezogen werden (durch einen Download vom Internet). Es ist aber auch möglich, dass dem Benutzer auf seinem Smartphone beim Betreten eines Gebäudes oder Geländes die App zum Download angeboten wird.

Die Aufgabe wird weiterhin gelöst durch eine Anordnung zur dynamischen Ausgabe von Informationen zur Evakuierung von Personen, insbesondere aus Gebäuden, auf ein Smartphone einer jeweiligen Person, die Anordnung umfassend:
- eine geeignete erste Sensorik zur Bestimmung der aktuellen Verwendbarkeit der jeweiligen im Gebäude befindlichen Fluchtwege;
- ein Positionsbestimmungssystem zur Bestimmung der Positionen von im Gebäude befindlichen Personen;
- eine Steuereinheit zur Echtzeitverarbeitung der von der ersten Sensorik und der vom Positionsbestimmungssystem gelieferten Daten; wobei von der Steuereinheit basierend auf der aktuellen Verwendbarkeit der Fluchtwege und der aktuellen Position einer dedizierten Person Evakuierungsinformation auf dem Smartphone der dedizierten Person als Routinginformation auf einem Gebäudeplan grafisch bereitgestellt wird, und wobei das Smartphone zum Einlesen einer am Gebäude befindlichen Kennzeichnung in Form eines QR-Codes oder Barcodes über eine geeignete Lesevorrichtung verfügt, worüber der Gebäudeplan des Gebäudes einlesbar ist.

Die erfindungsgemässe Anordnung lässt sich leicht realisieren oder in einem bestehenden Gebäude bzw. Gelände nachrüsten, sind üblicherweise schon im Gebäude bzw. bei einem Benutzer vorhanden oder handelsüblich beziehbar. Als geeignete erste Sensorik zur Bestimmung der aktuellen Verwendbarkeit der jeweiligen im Gebäude befindlichen Fluchtwege können z.B. Kameras verwendet werden, die sich schon im Gebäude befinden oder leicht an den entsprechenden Orten (z.B. in Treppenhäusern oder hinter Notausgangstüren) nachrüstbar sind. Als Positionsbestimmungssystem kann z.B. ein GPS-System des Smartphone (Smartphones sind heutzutage bereits mit GPS-System ausgestattet bzw. kann ein GPS-System über eine App auf einem Smartphone nachgerüstet werden). Es ist aber auch möglich ein Indoor-Positionsbestimmungssystem zu verwenden (z.B. basierend auf im Gebäude befindlichen Funkzellen, basierend auf RFID-Technologie oder durch Near Field Communication (NFC)). Die Steuereinheit (z.B. ein handelsüblicher Computer, wie Server, PC oder Laptop) zur Echtzeitverarbeitung der von der ersten Sensorik und der vom Positionsbestimmungssystem gelieferten Daten ist mit entsprechender Software (Kommunikationssoftware zur Kommunikation mit dem Smartphone, Simulationssoftware oder Entscheidungstabellen zur Bereitstellung der Evakuierungsinformation basierend auf der aktuellen Situation im Gebäude, etc.) ausgestattet. Die Evakuierungsinformation wird auf Ausgabemedien (Display, Lautsprecher) des portablen Gerätes optisch (grafisch und/oder textuell) und/oder akustisch (z.B. in Form von Handlungsanweisungen) ausgegeben.

Zur Realisierung eines Indoor-Positionsbestimmungssystems kann die geografische Position der im Gebäude angeordneten Funkzellen (WLAN-Knoten, Hotspots, Accespoints etc.) z.B. in Form einer Tabelle hinterlegt sein. Mit Vorteil sind im Gebäudeplan die Positionen der Funkzellen hinterlegt. Somit kann auf Basis des Triangulationsprinzips durch das Smartphone die aktuelle Position im Gebäude ermittelt werden.

Eine weitere vorteilhafte Ausgestaltung der Erfindung liegt darin, dass die Anordnung Mittel zur Bereitstellung des Gebäudeplans des Gebäudes auf dem Smartphone umfasst, wobei das Smartphone geeignet ist, die Evakuierungsinformation als Routinginformation auf dem Gebäudeplan grafisch darzustellen. Der Gebäudeplan kann z.B. durch Einlesen eines entsprechenden QR-Codes oder Barcodes, der z.B. am Eingang oder auf einem Notausgangsschild des entsprechenden Gebäudes angebracht sein kann, durch eine entsprechende Scan-App (z.B. ScanLife™ auf dem Smartphone eingelesen werden. Das Smartphone kann die Evakuierungsdaten ähnlich wie bei handelsüblichen Navigationssystemen z.B. in einer 2D/3D-Grafik (Map) darstellen. Es ist aber auch möglich die Evakuierungsdaten z.B. im Kamera-Live-View-Modus (bzw. Live-Preview-Modus), wie es bei Digitalkameras bekannt ist, auf dem Smartphone darzustellen. Die Darstellung der Evakuierungsinformation auf dem Gebäudeplan kann z.B. durch Informationseinblendung (Bild und/oder Textinformation) mittels Overlaytechnik erfolgen (z.B. durch direktes Hardware-Overlay oder auch durch Software-Overlay). Handelsübliche Smartphones sind heutzutage üblicherweise für diese Darstellungsmöglichkeiten ausgestattet oder können entsprechend nachgerüstet werden.

Eine weitere vorteilhafte Ausgestaltung der Erfindung liegt darin, dass die Anordnung Teil eines Gebäudeleit- und/oder Gefahrenmeldesystems ist. In einem Gebäudeleit- oder Gefahrenmeldesystem sind statische (Pläne) und dynamische Daten (z.B. Zimmerbelegungen in einem Hotel) vorhanden bzw. zentral abgreifbar. Durch die Integration in eine Gebäudeleit- oder Gefahrenmeldesystems können im Gefahrenfall (z.B. Brand) geeignete Rettungsmassnahmen auf einzelne Personen zielgerichtet koordiniert bzw. veranlasst werden.

Ein Ausführungsbeispiel der Erfindung ist in der Zeichnung dargestellt und wird im Folgenden erläutert.

Dabei zeigen:
- FIG 1: eine beispielhafte Prinzipdarstellung für die vorliegende Erfindung, und
- FIG 2: ein beispielhaftes Flussdiagramm für ein Verfahren zur Durchführung der vorliegenden Erfindung.

Derzeit erfolgt die Evakuierung eines Gebäudes, eines Schiffes oder eines Geländes nach akustischer und/oder optischer Alarmierung. Die betroffenen Personen müssen sich dann anhand einer statischen Fluchtwegkennzeichung (z.B. grüne Hinweisschilder für Notausgänge) den Weg zum nächsten Notausgang suchen. In fremden unübersichtlichen Gebäuden ist das für eine betroffene Person oft schwer. Auch kann z.B. der Fluchtweg über ein Treppenhaus durch hohe Rauchentwicklung unpassierbar werden. Statische Fluchtwegkennzeichungen berücksichtigen solche Situationen nicht.

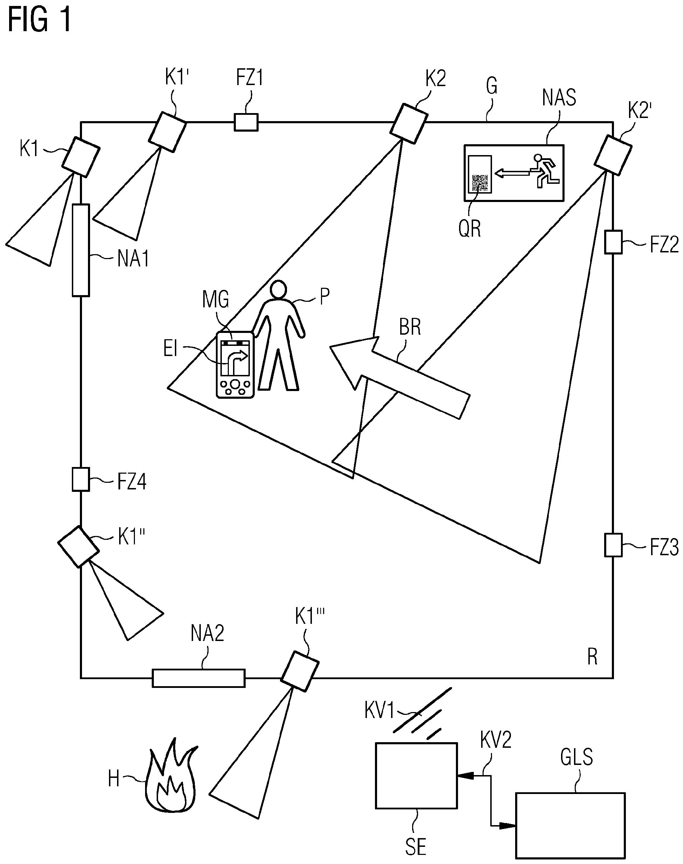

Figur 1 zeigt eine beispielhafte Prinzipdarstellung für die vorliegende Erfindung. In einem Raum R eines Gebäudes G befindet sich eine Person P. Bei dem Raum kann es sich z.B. um ein Zimmer, einen Flur, ein Treppenhaus, einen Balkon, aber prinzipiell auch um einen Aussenbereich eines Gebäudes G handeln. Im Falle eines Notfalls (z.B. Feuer, Terroralarm) sollen im Gebäude G befindliche Personen P sicher und schnell evakuiert werden. Heutzutage sind Gebäude (d.h. insbesondere öffentliche Gebäude) mit Notausgängen NA1, NA2 und Wegweisern zu Notausgängen versehen, um Personen P im Notfall einen Weg aus dem Gebäude G zu zeigen. Bei den bekannten statischen Notausgang-Systemen ist aber nicht sichergestellt, dass der Weg hinter einer Notausgangstür NA1, NA2 auch wirklich einen Fluchtweg aus dem Gebäude G darstellt, denn der Fluchtweg hinter einer der Notausgangstüren NA1, NA2 könnte versperrt sein.

Die erfindungsgemäße Anordnung ermöglicht dagegen eine dynamische Ausgabe von Informationen EI zur Evakuierung von Personen P aus Gebäuden G (prinzipiell ist die erfindungsgemässe Anordnung nicht auf die Evakuierung von Personen aus Gebäuden beschränkt, sondern auch für die Evakuierung von Schiffen oder anderen Veranstaltungen, wie z.B. Rockkonzerten, einsetzbar). Gemäß der Darstellung nach Figur 1 umfasst die Anordnung eine geeignete erste Sensorik K1,K1',K1",K1"' zur Bestimmung der aktuellen Verwendbarkeit der jeweiligen im Gebäude befindlichen Fluchtwegen NA1,NA2. Als geeignete erste Sensorik K1,K1',K1",K1"' können z.B. Kameras verwendet werden. Alternativ oder optional kann die Sensorik K1,K1',K1", K1"' auch Brand- oder Rauch-/Gasmelder umfassen, oder eine Kombination aus unterschiedlichen Sensortypen darstellen. Eine geeignete Sensorik kann je nach vorliegenden Anforderungen oder Gegebenheiten vor Ort gewählt werden.

In Figur 1 überwachen die Kameras K1 und K1' den Notausgang NA1, die Kameras K1" und K1"' den Notausgang NA2. In Figur 1 erkennt die Kamera K1"', dass sich hinter dem Notausgang NA2 ein Hindernis H in Form eines Feuers befindet. Ein Fluchtweg über Notausgang NA2 wäre somit nicht passierbar. Diese Information, dass ausgehend vom Raum R ein Fluchtweg über den Notausgang NA2 für eine im Raum R befindliche Person P nicht verwendbar ist, wird der Steuereinheit SE von der Kamera K1"' in Echtzeit über eine Kommunikationsverbindung KV1 (z.B. mit Vorteil eine Funkverbindung) bereitgestellt. Die Steuereinheit SE (z.B. PC, Laptop, Workstation) bestimmt basierend auf dem Gebäudeplan und den von der ersten Sensorik K1,K1',K1",K1"' gelieferten Daten bezüglich über die Verwendbarkeit bzw. Passierbarkeit von Notausgängen NA1, NA2 Evakuierungsinformationen EI für im Gebäude G befindliche Personen P.

Die Steuereinheit SE übermittelt die Evakuierungsinformationen EI über die Kommunikationsverbindung KV1 auf das Smartphone MG einer im Gebäude G befindlichen Person P. Mit Vorteil wird die Evakuierungsinformation EI grafisch animiert auf dem Display des Smartphone MG ausgegeben. Optional kann die Evakuierungsinformation EI aber auch textuell und/oder akustisch (z.B. in Form von Handlungsanweisungen) auf dem Smartphone MG ausgegeben werden.

Die Anordnung umfasst weiterhin Mittel zur Bestimmung der aktuellen Positionsdaten der sich im Gebäude G befindlichen Personen P. Dies kann z.B. durch eine geeignete zweite Sensorik K2,K2' erfolgen. Die zweite Sensorik K2, K2' kann z.B. durch Kameras realisiert sein, die den jeweiligen Aufenthaltsort und Bewegungsrichtungen BR von Personen P erfassen. Die Positionsdaten der sich im Gebäude G befindlichen Personen P können aber auch durch ein im Gebäude befindliches Indoor-Positionsbestimmungssystem basierend auf im Gebäude befindlichen Funkzellen FZ1 bis FZ4 ermittelt und an die Steuereinheit SE weitergeleitet werden, mit Vorteil über eine drahtlose Kommunikationsverbindung. Es ist im Prinzip auch möglich das GPS-System des Smartphone MG zu Positionsbestimmung einer Person P zu verwenden.

Durch die Berücksichtigung der aktuellen Positionsdaten der sich im Gebäude G befindlichen Personen P und der aktuellen Fluchtwegssituation (welcher Fluchtweg ist benutzbar?; welcher Fluchtweg ist nicht passierbar?) können für jede Person P dedizierte Fluchtwegsinformationen EI bestimmt und auf dem jeweiligen Smartphone MG ausgegeben werden. Weiterhin kann eine geordnete und koordinierte Evakuierung erfolgen, da im Evakuierungsfall Engpässe oder Überlastsituationen in Fluchtwegen durch die Ausgabe von zielgerichteten Evakuierungsinformationen EI an die Personen P vermieden werden können.

Mit Vorteil umfasst die Anordnung Mittel zur Bereitstellung des Gebäudeplans des Gebäudes auf dem Smartphone MG, wobei das Smartphone MG geeignet ist, die Evakuierungsinformation als Routinginformation auf dem Gebäudeplan grafisch darzustellen. Der Gebäudeplan wird erfindungsgemäss durch Einlesen eines entsprechenden QR-Codes QR oder Barcodes, der z.B. am Eingang oder auf einem Notausgangsschild NAS des entsprechenden Gebäudes G angebracht sein kann, durch eine entsprechende Scan-App (z.B. ScanLife™ auf dem Smartphone MG eingelesen werden. Das Smartphone MG kann die Evakuierungsdaten ähnlich wie bei handelsüblichen Navigationssystemen z.B. in einer 2D/3D-Grafik (Map) darstellen. Es ist aber auch möglich die Evakuierungsdaten EI z.B. im Kamera-Live-View-Modus (bzw. Live-Preview-Modus), wie es bei Digitalkameras bekannt ist, auf dem Smartphone darzustellen. Die Darstellung der Evakuierungsinformation EI auf dem Gebäudeplan kann z.B. durch Informationseinblendung (Bild und/oder Textinformation) mittels Overlaytechnik erfolgen (z.B. durch direktes Hardware-Overlay oder auch durch Software-Overlay). Durch das Einlesen des Gebäudeplans durch eine geeigneten Kennung auf dem Smartphone MG im Gebäude G kann der Gebäudeplan bei Bedarf bereitgestellt werden (d.h. on demand).

Mit Vorteil wird durch die Steuereinheit SE, basierend auf den jeweils aktuellen Positionsdaten der im Gebäude G befindlichen Personen P und der aktuellen Verwendbarkeit der Fluchtwege NA1,NA2, eine Objektstromsimulation durchgeführt, und wobei basierend auf den Ergebnissen der Objektstromsimulation jeweils aktualisierte und dedizierte Evakuierungsinformationen EI auf dem Smartphone MG bereitgestellt werden. Durch eine Objektstromsimulation wird die zu erwartende Bewegung von Personen P basierend auf einem zugrundeliegenden Bewegungsmodell möglichst realistisch nachgebildet. Dadurch kann eine effektive Evakuierung des Gebäudes G oder eines Geländes erfolgen.

Mit Vorteil wird für die Objektstromsimulation auch die Emissionsausbreitung einer Gefahrenquelle H (z.B. ein Brand) im Gebäude G verwendet. Die Emissionen umfassen beispielsweise Hitzeemissionen oder Schadstoffemissionen bzw. Rauchemissionen, die durch eine Emissionsquelle bzw. einen Brandherd hervorgerufen werden. Die Emissionen können einen Personenstrom durch direkten Kontakt beeinflussen, beispielsweise indem Personen P durch die Emission verletzt werden, oder den betrachteten Personenstrom indirekt beeinflussen, da sie die Fortbewegungsgeschwindigkeit der Personen P verändern bzw. beeinflussen. Auch dadurch erfolgt eine effektive Evakuierung des Gebäudes G. Die Berechnung der Objektstromsimulation kann z.B. auf einem handelsüblichen PC mit entsprechender Software erfolgen.

Das Smartphone MG enthält Software zur Kommunikation mit der Steuereinheit SE, sowie zum Einlesen, Verarbeiten und Darstellen des Gebäudeplans mit den entsprechenden Evakuierungshinweisen EI. Mit Vorteil handelt es sich bei der Software um ein Computerprogramm-Produkt, das direkt in den internen Speicher eines Smartphone MG geladen werden kann und Softwareabschnitte umfasst, mit denen das erfindungsgemässe Verfahren zur dynamischen Ausgabe von Informationen zur Evakuierung von Personen durchführbar ist. Das Computerprogramm-Produkt enthält ausführbaren Programmcode der auf einem Prozessor des Smartphone ausgeführt wird. Das Computerprogramm-Produkt kann als Softwareprogramm auf das Smartphone geladen werden, z.B. über eine USB-Schnittstelle oder kabellos über eine Funkverbindung. Mit Vorteil ist das Computerprogramm-Produkt als sog. App ("Rescue App") vom Internet auf das Smartphone MG herunterladbar. Es ist aber auch möglich, dass beim Betreten eines Gebäudes G eine Person P automatisch auf einen Download der App durch eine entsprechende Information auf dem Smartphone MG hingewiesen wird und aufgefordert wird den Download vorzunehmen.

Mit Vorteil ist die Steuereinheit SE in einem Gebäudeleitsystem GLS integriert oder mit einem Gebäudeleitsystem GLS über eine geeignete Kommunikationsverbindung KV2 gekoppelt. In einem Gebäudeleitsystem GLS sind alle relevanten Informationen über ein Gebäude bekannt bzw. elektronisch in entsprechender Gebäudeleittechnik-Software (GLT) hinterlegt (z.B. die Information, ob ein Fluchtweg mit einem Rollstuhl befahrbar ist). Die Steuereinheit SE kann auf diese Informationen (z.B. durch Datenbankzugriff) zugreifen und für die Berechnung und Bereitstellung der Evakuierungsinformationen EI verwenden. So ist es z.B. möglich, dass Rollstuhlfahrer durch die Evakuierungsinformationen EI an einen sicheren Ort im Gebäude G geleitet werden können, um dort auf die Rettungsmannschaft zu warten. Die Steuereinheit SE ist mit entsprechender Prozessor- und Speicherkapazität ausgestattet.

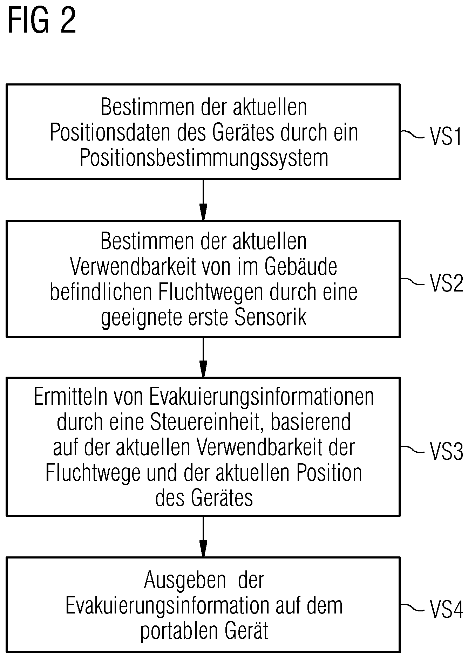

Figur 2 zeigt ein beispielhaftes Flussdiagramm für ein Verfahren zur Durchführung der vorliegenden Erfindung. Die Darstellung gemäß Figur 2 zeigt ein Verfahren zur dynamischen Ausgabe von Informationen EI zur Evakuierung von Personen P, insbesondere aus Gebäuden G, auf ein Smartphone MG mit folgenden Verfahrensschritten:
Bestimmen der aktuellen Positionsdaten des Smartphone durch ein Positionsbestimmungssystem (VS1);
Bestimmen der aktuellen Verwendbarkeit von im Gebäude G befindlichen Fluchtwegen durch eine geeignete erste Sensorik (VS2);
Ermitteln von Evakuierungsinformationen durch eine Steuereinheit SE, basierend auf der aktuellen Verwendbarkeit der Fluchtwege NA1,NA2 und der aktuellen Position des Smartphone MG (VS3); und
Ausgeben der Evakuierungsinformation EI auf dem Smartphone MG (VS4).

Die Bestimmung der aktuellen Verwendbarkeit von Fluchtwegen beruht insbesondere auf deren jeweiligen Auslastung und/oder deren Passierbarkeit.

Weiterhin umfasst das Verfahren weitere Schritte:
- Laden eines Gebäudeplans des Gebäudes auf das Smartphone.
- Ausgeben der Evakuierungsinformation als grafische Routinginformation auf dem Gebäudeplan auf dem Display des Smartphone.

Das Laden des Gebäudeplans auf das Smartphone erfolgt erfindungsgemäss durch das Einlesen einer am Gebäude befindlichen Kennzeichnung in Form von QR-Code oder Barcode durch eine geeignete Lesevorrichtung des Smartphone (z.B. durch eine Scan-App) .
- Durchführen einer Objektstromsimulation durch die Steuereinheit SE, basierend auf den aktuellen Positionsdaten der im Gebäude G befindlichen Personen P und der aktuellen Verwendbarkeit der Fluchtwege, wobei basierend auf den Ergebnissen der Objektstromsimulation jeweils aktuelle Evakuierungsinformationen auf dem Smartphone MG bereitgestellt werden.

Das erfindungsgemässe Verfahren wird durch Kommunikation der entsprechenden Software des Smartphone MG mit der Steuereinheit SE realisiert. Es ist aber auch möglich, dass das Smartphone MG nur als Ausgabemedium der von der Steuereinheit SE bereitgestellten Evakuierungsinformation fungiert.

Die vorliegende Erfindung bietet insbesondere folgende Vorteile:
- Bessere Orientierung innerhalb des Gebäudes, insbesondere für Personen, die ein Gebäude zum ersten Mal betreten.
- Dynamische Fluchtwegberechnung, um mögliche Gefahrenstellen zu "umlaufen".
- Positionsübermittlung an Rettungskräfte, wenn Selbstrettung nicht möglich ist.
- Aktuelle Gebäudedaten können z.B. über QR-Scan auf das Smartphone übertragen werden.
- Ausgabe von dedizierten Evakuierungsinformationen basierend auf der aktuellen Position einer Person und der aktuell vorliegenden Gefahrensituation.

Verfahren und Anordnung zur dynamischen Ausgabe von Informationen zur Evakuierung von Personen, insbesondere aus Gebäuden, auf ein Smartphone, wobei die aktuelle Positionsdaten des Smartphone durch ein Positionsbestimmungssystem bestimmt werden; wobei die aktuelle Verwendbarkeit von im Gebäude befindlichen Fluchtwegen durch eine geeignete erste Sensorik bestimmt wird; wobei durch eine Steuereinheit, basierend auf der aktuellen Verwendbarkeit der Fluchtwege und der aktuellen Position des Gerätes Evakuierungsinformationen ermittelt werden; und wobei die Evakuierungsinformation auf dem Smartphone der Person ausgegeben wird. In Notfallsituationen können somit für eine Person dedizierte Evakuierungsinformationen in Abhängigkeit des Aufenthaltsortes der Person und der jeweiligen Gefahrensituation ermittelt und auf dem Smartphone der Person ausgegeben werden. Dies ermöglicht u.a. eine schnelle und effiziente Evakuierung des Gebäudes oder eines Geländes.

### Bezugszeichen

- G: Gebäude
- R: Raum
- K1,K1',K1",K1"': Erste Sensorik
- K2,K2': Zweite Sensorik
- P: Person
- MG: Smartphone
- BR: Bewegungsrichtung
- H: Hindernis
- EI: Evakuierungsinformation
- SE: Steuereinheit
- KV1, KV2: Kommunikationsverbindung
- NA1, NA2: Fluchtweg
- NAS: Notausgangsschild
- QR: Kennzeichnung
- GLS: Gebäudeleitsystem
- FZ1 - FZ4: Funkzellen
- VS1 - VS4: Verfahrensschritt

## Patentansprüche

1. Verfahren zur dynamischen Ausgabe von Informationen (EI) zur Evakuierung von Personen (P) aus Gebäuden (G) auf ein Smartphone (MG), das Verfahren umfassend:
Bestimmen der aktuellen Positionsdaten des Smartphone (MG) durch ein Positionsbestimmungssystem;
Bestimmen der aktuellen Verwendbarkeit von im Gebäude (G) befindlichen Fluchtwegen (NA1,NA2) durch eine geeignete erste Sensorik (K1,K1',K1",K1"');
Ermitteln von Evakuierungsinformationen (EI) durch eine Steuereinheit, basierend auf der aktuellen Verwendbarkeit der Fluchtwege und der aktuellen Position des Smartphone (MG); und
Ausgeben der Evakuierungsinformationen (EI) auf dem Smartphone (MG),
wobei die Evakuierungsinformationen (EI) als grafische Routinginformation auf einem Gebäudeplan auf dem Smartphone (MG) ausgegeben werden,
wobei der Gebäudeplan durch Einlesen einer am Gebäude (G) befindlichen Kennzeichnung (QR) in Form eines QR-Codes oder Barcodes durch eine geeignete Lesevorrichtung des Smartphone (MG) geladen wird.

2. Verfahren nach Anspruch 1, wobei die Bestimmung der aktuellen Verwendbarkeit von Fluchtwegen (NA1,NA2) auf deren jeweiligen Auslastung und/oder deren Passierbarkeit beruht.

3. Verfahren nach Anspruch 1 oder 2, wobei durch zielgerichtete Evakuierungsinformationen (EI) an die Personen (P) eine koordinierte Evakuierung erfolgt.

4. Verfahren nach einem der vorstehenden Ansprüche, wobei basierend auf den jeweils aktuellen Positionsdaten der im Gebäude (G) befindlichen Personen (P) und der aktuellen Verwendbarkeit der Fluchtwege, eine Objektstromsimulation durchgeführt wird, und wobei basierend auf den Ergebnissen der Objektstromsimulation jeweils aktualisierte Evakuierungsinformationen (EI) auf dem Smartphone (MG) ausgegeben werden.

5. Computerprogramm-Produkt, das direkt in den internen Speicher eines Smartphone (MG) geladen werden kann und Softwareabschnitte umfasst, mit denen ein Verfahren zur dynamischen Ausgabe von Informationen (EI) zur Evakuierung von Personen (P) nach einem der Ansprüche 1 bis 4 durchführbar ist.

6. Computerprogramm-Produkt nach Anspruch 5, wobei es sich beim Computerprogramm-Produkt um ein vom Benutzer (P) vom Internet oder einem Intranet herunterladbares Softwareprogramm (App) handelt.

7. Anordnung zur dynamischen Ausgabe von Informationen (EI) zur Evakuierung von Personen (P), insbesondere aus Gebäuden (G), auf ein Smartphone (MG) einer jeweiligen Person, die Anordnung umfassend:
eine geeignete erste Sensorik (K1,K1',K1",K1"') zur Bestimmung der aktuellen Verwendbarkeit der jeweiligen im Gebäude (G) befindlichen Fluchtwege (NA1,NA2);
ein Positionsbestimmungssystem zur Bestimmung der Positionen von im Gebäude (G) befindlichen Personen (P);
eine Steuereinheit (SE) zur Echtzeitverarbeitung der von der ersten Sensorik (K1,K1',K1",K1"') und der vom Positionsbestimmungssystem gelieferten Daten;
wobei von der Steuereinheit (SE) basierend auf der aktuellen Verwendbarkeit der Fluchtwege (NA1,NA2) und der aktuellen Position einer dedizierten Person (P) Evakuierungsinformation (EI) auf dem Smartphone (MG) der dedizierten Person (P) als Routinginformation auf einem Gebäudeplan grafisch bereitgestellt werden, wobei das Smartphone (MG) zum Einlesen einer am Gebäude (G) befindlichen Kennzeichnung (QR) in Form eines QR-Codes oder Barcodes über eine geeignete Lesevorrichtung verfügt, worüber der Gebäudeplan des Gebäudes einlesbar ist.

8. Anordnung nach Anspruch 7, wobei die Steuereinheit eingerichtet ist, basierend auf den jeweils aktuellen Positionsdaten der im Gebäude (G) befindlichen Personen (P) und der aktuellen Verwendbarkeit der Fluchtwege, eine Objektstromsimulation durchzuführen, und wobei basierend auf den Ergebnissen der Objektstromsimulation jeweils aktualisierte Evakuierungsinformationen (EI) auf dem Smartphone (MG) bereitstellbar sind.

9. Anordnung nach Anspruch 7 oder 8, wobei die Anordnung Teil eines Gebäudeleit- und/oder Gefahrenmeldesystems (GLS) ist.

## Claims

1. Method for the dynamic output of information (EI) for the evacuation of persons (P) from buildings (G), onto a smartphone (MG), the method including:
- determining the current position data of the smartphone (MG) using a position determination system;
- determining the current usability of escape routes (NA1, NA2) located in the building (G) using a suitable first sensor system (K1, K1', K1", K1"');
- determining evacuation information (EI) using a control unit, based on the current usability of the escape route and the current position of the smartphone (MG); and
- outputting the evacuation information (EI) on the smartphone (MG),
wherein the evacuation information (EI) is output as graphical routing information on a building plan on the smartphone (MG),
wherein the building plan is loaded by reading in an identifier (QR) located on the building (G) in the form of a QR code or barcode by means of a suitable read facility of the smartphone (MG).

2. Method according to claim 1, wherein the determination of the current usability of escape routes (NA1, NA2) is based on their respective utilisation and/or their passability.

3. Method according to claim 1 or 2, wherein a coordinated evacuation takes place by targeted evacuation information (EI) to the person (P).

4. Method according to one of the preceding claims, wherein
an object flow simulation is implemented based on the respective current position data of the persons (P) located in the building (G) and the current usability of the escape routes and wherein, based on the results of the object flow simulation, updated evacuation information (EI) is output onto the smartphone (MG) in each instance.

5. Computer program product, which can be loaded directly into the internal memory of a smartphone (MG) and includes software sections, with which a method for the dynamic output of information (EI) can be implemented in order to evacuate persons (P) according to one of claims 1 to 4.

6. Computer program product according to claim 5, wherein the computer program product is a software program (app) which can be downloaded by the user (P) from the Internet or Intranet.

7. Arrangement for the dynamic output of information (EI) for the evacuation of persons (P) in particular from buildings (G), onto a smartphone (MG) of a respective person, the arrangement including:
a suitable first sensor system (K1, K1', K1", K"') for determining the current usability of the respective escape routes (NA1, NA2) located in the building (G);
a position determination system for determining the positions of persons (P) located in the building (G);
a control unit (SE) for the real-time processing of the data provided by the first sensor system (K1, K1', K1", K1"') and the position determination system;
wherein evacuation information (EI) is graphically provided onto the smartphone (MG) of the dedicated person (P) as routing information on the building plan by the control unit (SE) based on the current usability of the escape routes (NA1, NA2) and the current position of a dedicated person (P),
wherein the smartphone (MG) has a suitable read apparatus for reading in an identifier (QR) located on the building (G) in the form of a QR code or barcode, by way of which a building plan of the building can be read in.

8. Arrangement according to claim 7, wherein the control unit is set up to implement an object flow simulation based on the respectively current position data of the persons (P) located in the building (G) and the current usability of the escape routes and wherein, based on the results of the object flow simulation, updated evacuation information (EI) can be provided on the smartphone (MG) in each instance.

9. Arrangement according to claim 7 or 8, wherein the arrangement is part of a building management and/or hazard alarm system (GLS).

## Revendications

1. Procédé pour l'émission dynamique d'informations (EI) pour l'évacuation de personnes (P) de bâtiments (G) sur un smartphone (MG), le procédé comprenant :
la détermination des données de position actuelles du smartphone (MG) par un système de détermination de position ;
la détermination de l'utilisabilité actuelle d'issues de secours (NA1, NA2) se trouvant dans le bâtiment (G) par un premier système de capteurs (K1, K1', K1" , K1"') approprié ;
le calcul d'informations d'évacuation (EI) par une unité de commande, en se basant sur l'utilisabilité actuelle des issues de secours et la position actuelle du smartphone (MG) ; et
l'émission des informations d'évacuation (EI) sur le smartphone (MG),
dans lequel les informations d'évacuation (EI) sont émises en tant qu'information graphique de tracé sur un plan de bâtiment sur le smartphone (MG),
dans lequel le plan de bâtiment est chargé par la lecture d'un identifiant (QR) se trouvant sur le bâtiment (G) sous forme d'un code QR ou d'un code-barres par un dispositif de lecture approprié du smartphone (MG).

2. Procédé selon la revendication 1, dans lequel la détermination de l'utilisabilité actuelle d'issues de secours (NA1, NA2) repose sur respectivement leur taux d'utilisation et/ou leur capacité à être empruntées.

3. Procédé selon la revendication 1 ou 2, dans lequel une évacuation coordonnée s'effectue par des informations d'évacuation (EI) ciblées aux personnes (P).

4. Procédé selon l'une des revendications précédentes, dans lequel, en se basant sur les données de position actuelles respectives des personnes (P) se trouvant dans le bâtiment (G) et de l'utilisabilité actuelle des issues de secours, une simulation de flux d'objets est exécutée,
et dans lequel en se basant sur les résultats de la simulation de flux d'objets, des informations d'évacuation (EI) actualisées respectives sont émises sur le smartphone (MG).

5. Produit de programme informatique qui peut être chargé directement dans la mémoire interne d'un smartphone (MG) et comprend des parties de logiciel avec lesquelles un procédé d'émission dynamique d'informations (EI) pour l'évacuation de personnes (P) selon l'une des revendications 1 à 4 peut être exécuté.

6. Produit de programme informatique selon la revendication 5, dans lequel il s'agit, pour le produit de programme informatique, d'un programme logiciel (App) pouvant être téléchargé à partir d'Internet ou d'un Intranet par l'utilisateur (P).

7. Agencement pour l'émission dynamique d'informations (EI) pour l'évacuation de personnes (P), en particulier de bâtiments (G), sur un smartphone (MG) d'une personne respective, l'agencement comprenant :
un premier système de capteurs (K1, K1', K1", K1"') approprié pour la détermination de l'utilisabilité actuelle des issues de secours (NA1, NA2) respectives se trouvant dans le bâtiment (G) ;
un système de détermination de position pour la détermination des positions de personnes (P) se trouvant dans le bâtiment (G) ;
une unité de commande (SE) pour le traitement en temps réel des données fournies par le premier système de capteurs (K1, K1', K1", K1"') et le système de détermination de position ;
dans lequel des informations d'évacuation (EI) sont affichées graphiquement en tant qu'information de tracé sur un plan de bâtiment sur le smartphone (MG) d'une personne (P) dédiée par l'unité de commande (SE) en se basant sur l'utilisabilité actuelle des issues de secours (NA1, NA2) et la position actuelle de la personne (P) dédiée,
dans lequel le smartphone (MG) dispose d'un dispositif de lecture approprié pour lire un identifiant (QR) se trouvant sur le bâtiment (G) sous forme d'un code QR ou d'un code-barres, sur lequel le plan de bâtiment peut être lu.

8. Agencement selon la revendication 7, dans lequel l'unité de commande est équipée pour exécuter une simulation de flux d'objets, en se basant sur les données de position actuelle respectives des personnes (P) se trouvant dans le bâtiment (G) et d'utilisabilité actuelle des issues de secours, et dans lequel en se basant sur les résultats de la simulation de flux d'objets, des informations d'évacuation (EI) actualisées respectives peuvent être fournies sur le smartphone (MG).

9. Agencement selon la revendication 7 ou 8, dans lequel l'agencement fait partie d'un système de contrôle de bâtiment et/ou d'un système de signalement de danger (GLS).
